(19) Europäisches Patentamt
European Patent Office
Office européen des brevets

(11) Publication number: **0 243 143 B1**

(12) **EUROPEAN PATENT SPECIFICATION**

(45) Date of publication of patent specification: **10.07.91**

(51) Int. Cl.⁵: **B01J 27/19**, C10G 47/06, C10G 47/26

(21) Application number: **87303482.1**

(22) Date of filing: **21.04.87**

(54) **Method of preparing a phosphomolybdic acid catalyst and hydroconversion process utilizing the catalyst.**

(30) Priority: **21.04.86 US 854307**

(43) Date of publication of application:
**28.10.87 Bulletin 87/44**

(45) Publication of the grant of the patent:
**10.07.91 Bulletin 91/28**

(84) Designated Contracting States:
**BE DE FR GB IT NL**

(56) References cited:
**FR-A- 2 367 813**
**US-A- 4 192 735**
**US-A- 4 196 072**
**US-A- 4 637 870**

(73) Proprietor: **EXXON RESEARCH AND ENGINEERING COMPANY**
**P.O.Box 390, 180 Park Avenue**
**Florham Park, New Jersey 07932(US)**

(72) Inventor: **Bearden, Roby Jr.**
**505 Stanford Avenue**
**Baton Rouge Louisiana 70808(US)**
Inventor: **Aldridge, Clyde Lee**
**6022 South Pollard Parkway**
**Baton Rouge Louisiana 70808(US)**
Inventor: **Lewis, William Ernest**
**1150 Magnolia Wood Avenue**
**Baton Rouge Louisiana 70808(US)**
Inventor: **Mayer, Francis Xavier**
**5277 Whitehaven Street**
**Baton Rouge Louisiana 70808(US)**
Inventor: **Taylor, James Howard Jr.**
**5545 Melrose Boulevard**
**Baton Rouge Louisiana 70808(US)**

(74) Representative: **Somers, Harold Arnold et al**
**ESSO Engineering (Europe) Ltd. Patents & Licences Mailpoint 72 Esso House Ermyn Way**
**Leatherhead, Surrey KT22 8XE(GB)**

## EP 0 243 143 B1

### Description

This invention relates to an improvement in a slurry hydroconversion process utilizing a metal-containing catalyst prepared from a catalyst precursor dispersed in a hydrocarbon and to an improved method of preparing the catalyst.

Slurry hydroconversion processes utilizing a catalyst prepared in a hydrocarbon oil from thermally decomposable or oil soluble metal compound precursors are known. See, for example, U.S. Patents US-A-4,226,742; 4,244,839 and 4,111,787.

It is also known to use such catalysts in hydroconversion processes (i.e., coal liquefaction) in which coal particles are slurried in a hydrocarbonaceous material. See, for example, U.S. Patent US-A-4,077,867.

The term "hydroconversion" with reference to a hydrocarbonaceous oil is used herein to designate a catalytic process conducted in the presence of hydrogen in which at least a portion of the heavy constituents of the oil is converted to lower boiling hydrocarbon products while it may simultaneously reduce the concentration of nitrogenous compounds, sulfur compounds and metallic constituents of the oil.

US-A-4196072 describes and claims a process for the hydroconversion of a carbonaceous material which comprises:

(a) forming a mixture of said carbonaceous material and a poly acid selected from the group consisting of isopoly acids and heteropoly acids and salts thereof, wherein said poly acid comprises at least one metal constituent selected from the group consisting of molybdenum and tungsten;

(b) converting said poly acid to a catalyst within said mixture in the presence of a hydrogen-containing gas by heating said mixture to an elevated temperature;

(c) reacting the resulting mixture containing said catalyst with hydrogen under hydroconversion conditions; and

(d) recovering a normally liquid hydrocarbon product, the improvement which comprises: adding said poly acid and phosphoric acid, to said mixture said phosphoric acid being added in an amount such as to provide a ratio from about 0.5 to about 3.5 atoms of phosphorus per one atom of said metal constituent, said catalyst of step (b) being the conversion product of said phosphoric acid and said poly acid. Preferably, the said ratio ranges from about 1 to 3 atoms of phosphorus per atom of said metal constituent.

The term "hydroconversion" with reference to coal is used herein to designate a catalytic conversion of coal to normally liquid hydrocarbons in the presence of hydrogen.

All boiling points referred to herein are atmospheric pressure equivalent boiling points unless otherwise specified.

It has now been found that a catalyst can be prepared from a phosphomolybdic acid catalyst precursor concentrate at relatively low pressures in a specified manner and that use of the catalyst in a hydroconversion process will provide advantages that will become apparent in the ensuing description.

In accordance with the invention, there is provided a method for preparing a catalyst wherein aqueous phosphomolybdic acid is heated in the presence of a hydrocarbonaceous oil and a gas selected from a hydrogen-containing gas, a hydrogen sulfide-containing gas and mixtures thereof to convert said phosphomolybdic acid to a solid catalyst, and which comprises the steps of: (a) forming a mixture of a hydrocarbonaceous oil comprising constituents boiling above about 1050°F (565.6°C) and said aqueous solution of phosphomolybdic acid in an amount to provide from about 0.2 to 2 weight percent molybdenum, calculated as elemental molybdenum, based on said hydrocarbonaceous oil, to produce a water-containing catalyst precurser concentrate; (b) drying said water-containing catalyst precursor concentrate to remove said water and produce a substantially water-free catalyst precursor concentrate, (c) contacting said water-free catalyst precursor concentrate with added hydrogen sulfide at a temperature from about 50°F (10°C) and a hydrogen sulfide partial pressure ranging from about 0 psig (0 kPa) to about 100 psig (689 kPa) to produce a sulfided catalyst precursor concentrate; (d) heating said catalyst precursor concentrate of step (b) or step (c) in the absence of hydrogen sulfide and in the absence of hydrogen, at a temperature of at least about 600°F (315.6°C) and a total pressure ranging from about 0 to about 100 psig (about 0 to about 689.5 kPa), for a time sufficient to convert said catalyst precursor to a solid molybdenum-containing catalyst and, thereby, produce a catalyst concentrate, and recovering the resulting concentrate.

In accordance with the invention, there is also provided a hydroconversion process utilizing the above prepared catalyst.

The term "phosphomolybdic acid" is used herein to designate aqueous solutions of the reaction product of $MoO_3$ with dilute phosphoric acid in which the phosphorus to molybdenum atomic ratio ranges from 0.083 to 2.00, preferably from 0.083 to 1.00 and most preferably from 0.083 to 0.50. Said solutions can contain one or more phosphomolybdic acid species such as the 12-molybdophosphoric acid and the

2

dimeric 18-molybdophosphoric acid. Moreover, the crystalline 12 and 18 acids can be used to prepare the water solutions of phosphomolybdic acid used in the process of the invention. As to phosphomolybdic acids refer to Topics In Current Chemistry No. 76, published by Springer-Verlag of New York, pp. 1-64, 1978.

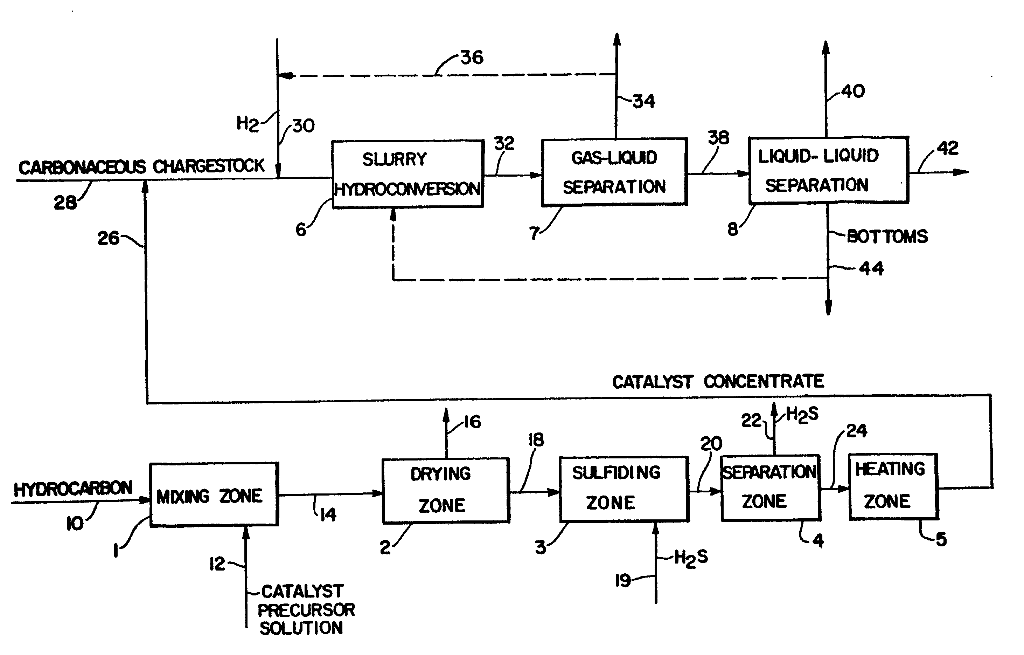

The Figure is a schematic flow plan of one embodiment of the invention.

Referring to the figure, a heavy hydrocarbonaceous oil is introduced by line 10 into mixing zone 1. Suitable heavy hydrocarbonaceous oils for introduction into mixing zone 1 include hydrocarbonaceous oils comprising constituents boiling above 1050°F (565°C), preferably having at least 10 wt.% constituents boiling above 1050°F (565°C), such as crude oils, atmospheric residua boiling above 650°F (343.3°C), vacuum residua boiling above 1050°F (565°C). The hydrocarbonaceous oils may comprise sulfur components such as, for example, from about 1 weight percent, preferably at least about 4 weight percent, sulfur calculated as elemental sulfur and at least about 0.1 weight percent, preferably at least about 0.3 weight percent nitrogen calculated as elemental nitrogen (N). The sulfur and nitrogen are typically present as organic compounds. If desired, when the hydrocarbonaceous oil comprises an insufficient amount of sulfur, a source of sulfur, such as an organic sulfur compound or elemental sulfur may be added to the oil. Preferably, the hydrocarbonaceous oil has an initial boiling point above at least 650°F (343°C) and comprises asphaltenes and/or resins. The hydrocarbonaceous - oil carried by line 10 may be derived from any source such as petroleum, tar sand oil, shale oil, liquids derived from coal liquefaction processes and mixtures thereof. Generally, these oils have a Conradson carbon content ranging from about 5 to about 50 wt.% (as to Conradson carbon, see ASTM test D-189-65). An aqueous solution of phosphomolybdic acid (catalyst precursor) is introduced into mixing zone 1 by line 12. A sufficient amount of the aqueous phosphomolybdic acid solution is introduced into mixing zone 1 to provide from about 0.2 to 2, preferably from about 0.2 to 1, more preferably 0.3 to 1 wt.% molybdenum from the phosphomolybdic acid, calculated as elemental molybdenum based on the hydrocarbonaceous oil. The resulting mixture is a water-containing catalyst precursor concentrate (i.e., wet catalyst precursor concentrate). The wet catalyst precursor concentrate is removed from mixing zone 1 by line 14 and passed to drying zone 2 in which water is removed from the wet catalyst precursor concentrate by any suitable manner, such as, for example, by heating the water-containing catalyst precursor concentrate to a temperature sufficient to vaporize the water, for example, a temperature ranging from 212 to 300°F (100 to 148.9°C). The $H_2O$ is removed from drying zone 2 by line 16. The essentially water-free (i.e., dry) catalyst precursor concentrate is removed from drying zone 2 and is passed to sulfiding zone 3. This sulfiding step may be omitted from the sequence to produce less preferred catalysts. In sulfiding zone 3, the dry catalyst precursor concentrate is contacted with a sulfiding agent which may be a hydrogen sulfide-containing gas or a hydrogen sulfide precursor. Hydrogen may be present or absent during the sulfiding step. Preferably the sulfiding agent is a gas comprising from 10 to 100 mole percent hydrogen sulfide. The sulfiding step is conducted at relatively low total pressures. Suitable low pressures include a total pressure ranging from about 0 to 450 psig (0 to 3.103 MPa), preferably a pressure ranging from about 0 to 100 psig (0 to 689 kPa). The hydrogen sulfide partial pressure may range from about 0 to 200 psig (0 to 1.379 MPa), preferably from 5 to 100 psig (0 to 689.5 kPa). Suitable temperatures in the sulfiding zone include a temperature of from about 50 to 600°F (10 to 315.6°C), more preferably from about 200 to 400°F (93.3 to 204.4°C). Contact of the dry catalyst precursor concentrate with the sulfiding agent at the given conditions produces a sulfided catalyst precursor concentrate. The effluent of the sulfiding zone comprising the sulfided catalyst precursor concentrate and a gaseous phase including the unreacted $H_2S$ is passed by line 20 to separation zone 4 in which the gaseous phase comprising the $H_2S$ is separated from the sulfided catalyst precursor concentrate. The gaseous phase is removed by line 22. The sulfided catalyst precursor concentrate is passed by line 24 into heating zone 5. In heating zone 5, the sulfided catalyst precursor concentrate of the preferred embodiment (or the non-sulfided catalyst precursor concentrate from zone 2) is heated at a temperature of at least about 600°F (316°C), preferably at a temperature ranging from 650 to 800°F (316 to 427°C) and a total pressure ranging from 0 psig to 100 psig (0 to 689.5 kPa), preferably from 0 psig to 50 psig (0 to 344.8 kPa), in the absence of added hydrogen sulfide and in the absence of added hydrogen, for a time sufficient to convert the catalyst precursor to a solid molybdenum-containing catalyst and, thereby, produce a catalyst concentrate. Zone 5 may be considered a catalyst formation zone in which the sulfided catalyst precursor or the phosphomolybdic acid catalyst precursor is converted to the solid-molybdenum-containing catalyst. The catalyst concentrate is removed from heating zone 5 by line 26. At least a portion of the catalyst concentrate is introduced into line 28 which carries a carbonaceous chargestock comprising a hydrocarbon which may have the same boiling point range as the hydrocarbonaceous oil of line 10 or the hydrocarbon may be a single hydrocarbon (e.g., tetralin) or a mixture of hydrocarbons having the same boiling point range as the hydrocarbonaceous oil of line 10 or a different boiling point range from the hydrocarbonaceous oil of line 10. The carbonaceous chargestock may be a hydrocarbonaceous oil or coal in a hydrocarbon diluent. Suitable hydrocarbonaceous oil chargestocks include crude oils; mixture of hydrocarbons boiling above 430°F (221°C), preferably above 650°F (343°C), for example, gas oils, vacuum residua, atmospheric residua, once-through coker bottoms, and asphalt. The hydrocarbonaceous oil chargestock may be derived from any source, such as petroleum, shale oil, tar sand oil, oils derived from coal liquefaction processes, including coal liquefaction bottoms, and mixtures thereof. Preferably, the hydrocarbonaceous oils have at least 10 wt.% materials boiling above 1050°F (565°C). More preferably, the hydrocarbonaceous oils have a Conradson carbon content ranging from about 5 to about 50 wt.%. Coal may be added to any of these oils. Alternatively, slurries of coal in a hydrocarbon diluent may be used as chargestock to convert the coal (i.e., coal liquefaction). The diluent may be a single type of hydrocarbon or a mixture of hydrocarbons and may be a light hydrocarbon or a heavy hydrocarbon, as described in U.S. Patent US-A-4,094,765, column 1, lines 54 to column 2, line 43, the teachings of which are hereby incorporated by reference. When the chargestock into which at least a portion of the catalyst concentrate of line 26 is introduced is an oil, the concentrate disperses in the oil. If the chargestock comprises coal in a diluent, the portion of concentrate of line 26 is added to the diluent before, after or simultaneously with the addition of coal to the diluent. A hydrogen-containing gas is introduced by line 30 into line 28. The mixture of carbonaceous chargestock, catalyst concentrate and hydrogen is passed into slurry hydroconversion zone 6. The catalyst concentrate of line 26 is added to the carbonaceous chargestock in an amount sufficient to provide from about 10 to about 2000 wppm molybdenum, preferably 50 to 1000 wppm molybdenum, calculated as the elemental molybdenum, based on the total hydroconversion zone chargestock, i.e., concentrate plus carbonaceous chargestock.

Suitable hydroconversion operating conditions are summarized in Table I.

## TABLE I

| Conditions | Broad Range | Preferred Range |
|---|---|---|
| Temperature, (°F) | (800 to 900) | (820 to 870) |
| °C | 426.7 to 482.2 | 437.8 to 465.6 |
| H₂ Partial Pressure, (psig) | (50 to 5000) | (100 to 2500) |
| kPa | 345 to 34 475 | 689 to 17 235 |

The hydroconversion zone effluent is removed by line 32 and passed to a gas-liquid separation zone 7 wherein the normally gaseous phase is separated from a normally liquid phase. The gaseous phase is removed from separation zone 7 by line 34. Alternatively, the gaseous phase, which comprises hydrogen, may be recycled by line 36, preferably after removal of undesired constituents to slurry hydroconversion zone 6 via line 30. The normally liquid phase, which comprises the molybdenum-containing catalytic solids and a hydroconverted hydrocarbonaceous oil product is passed by line 38 to separation zone 8 for fractionation by conventional means, such as distillation into various fractions such as light, medium boiling and heavy bottoms fractions. The light fraction is removed by line 40. The medium boiling fraction is removed by line 42. The heavy bottoms fraction is removed by line 44, and, if desired, at least a portion of the bottoms fraction may be recycled to hydroconversion zone 6.

Furthermore, if desired, the catalytic solids may be separated from the hydroconverted oil product and the separated solids may be recycled to hydroconversion zone 6.

The following examples are presented to illustrate the invention.

EXAMPLE 1 - Preparation of Presulfided Preformed Catalyst Concentrate (CHA Preparation 112)

The catalyst precursor concentrate preparation was carried out in a stainless steel tank that had a mixing zone with an internal diameter of 10 inches (25.4 cm) and a height of 12 inches (30.48 cm). A six-inch (15.24 cm) diameter, pitched-blade impeller with four 45° blades was used for stirring and was operated at a speed of 500 revolutions per minute. Heat was supplied by high pressure steam coils and by electrical strip heaters located on the external surface of the tank. Also, the tank was equipped for addition and maintenance of a gaseous atmosphere during concentrate preparations.

Step A - Formation of Wet Catalyst Precursor Concentrate

The tank was charged with 12,600 g of Cold Lake crude that contained 50 wt.% components boiling above 975°F (523.9°C), a sulfur content of 4.155 wt.%, a nitrogen content of 0.44 wt.%, a Conradson carbon content of 12.9 wt.% and an initial boiling point of 471°F (243.9°C). After flushing with nitrogen, the tank was heated with stirring to 178°F (81.1°C) whereupon 672.4 grams of a phosphoric acid modified aqueous solution of phosphomolybdic acid was added over the course of about 15 seconds. The water solution was prepared at room temperature by dissolving 117.1 g of crystalline phosphomolybdic acid (45.3% Mo) in 544.1 g deionized water and then adding 11.18 g phosphoric acid (85 wt.% $H_3PO_4$) to obtain a solution that contained 7.9 wt.% Mo and a P/Mo atom ratio of 0.25/1. Stirring was continued at 176°F (80°C) for 30 minutes whereupon the wet catalyst precursor concentrate was transferred to a vessel for removal of water.

Step B - Preparation of Dry Catalyst Precursor Concentrate

The wet catalyst precursor concentrate of Step A was charged to an open-top drum that was equipped with internal and externally mounted high pressure steam coils. Temperature was increased to 275°F (135°C) over the course of approximately 45 minutes to remove bulk water.

Step C - Preparation of Presulfided Catalyst Precursor Concentrate

The mixing tank of Step A was charged with 10,000 g of the dry catalyst precursor concentrate from Step C, and after flushing with nitrogen, was heated with stirring to a temperature of 325°F (162.8°C), whereupon 50 psig (344.8 kPa) hydrogen sulfide was added and stirring was continued at 325°F (162.8°C) under 50 psig (344.8 kPa) $H_2S$ pressure for 40 minutes to complete the sulfiding reaction.

Step D - Removal of Hydrogen Sulfide

While still at 325°F (162.8°C) the mixing tank was vented and then purged with nitrogen to remove hydrogen sulfide.

A sample of this $H_2S$ free, sulfided catalyst precursor concentrate (i.e., sulfided catalyst precursor in Cold Lake crude) was found to contain 0.4168 wt.% and 4.600 wt.% sulfur.

Step E - Formation of Catalyst

Upon removal of $H_2S$ in Step D, the mix tank was heated with stirring to 725°F (385°C) and was held at this temperature with stirring for a period of 20 minutes under a regulated, autogenous pressure of 25 psig (172.4 kPa). In the course of this treatment, a portion of the lower boiling components of the Cold Lake crude was removed by distillation. The resultant catalyst concentrate, which was determined to contain 0.503 wt.% Mo by assay, was cooled and stored under nitrogen for future use.

A sample of 30 g of the catalyst concentrate was diluted with 90 g of toluene at room temperature and then filtered over a No. 2 Whatman paper to recover catalyst solids, which solids were subsequently dried under vacuum for one hour at 100°C. In this manner there were recovered 0.99 g (3.3 wt.% on concentrate) of finely divided catalyst solids that contained 12.5 wt.% Mo.

EXAMPLE 2 - Test of Presulfided Preformed Catalyst Concentrate for Catalytic Activity (Run 1281)

To a 300 cm³ Autoclave Engineers Magnetically stirred autoclave was charged 119.12 g of Cold Lake crude oil plus 0.88 g of low pressure presulfided preformed catalyst concentrate of Example 1 to provide 35 ppm of molybdenum in the charge. The autoclave was flushed with $H_2$, pressure tested and vented to atmospheric pressure, then pressured to 50 psi (344.8 kPa) with $H_2S$ and then to 1650 psig (11.377 MPa) with $H_2$. This gas charge was then vented through caustic scrubbers and the $H_2$ measured through a wet test meter. This measurement gives the initial $H_2$ charge. The autoclave was then repressed with $H_2S$ and $H_2$ in the same manner and the experiment started. The autoclave was heated with stirring over a period of 43 minutes to 380°C and held at 380-385°C for 20 minutes after which it was further heated at 438°C over a period of 19 minutes and held at 438-443°C for 15 minutes at which time the autoclave was rapidly

5

cooled by means of an internal water coil. The gases were vented through caustic scrubbers, measured with a wet test meter, collected and analyzed by mass spectrometry. Comparison of the amount of recovered hydrogen with that charged showed that 8.714 liters STP (standard temperature and pressure) of hydrogen was consumed.

EXAMPLE 3 - Test of Catalyst System of Prior Art

An experiment was carried out similar to that of Example 2 except that molybdenum was supplied as molybdenum naphthenate (6% Mo content, supplied by Sheperd Chemical Co.) and that the naphthenate was added directly to the Cold Lake crude feedstock in accordance with the method described in U.S. Patent US-A-4,134,825. With this catalyst system, 55 ppm Mo on feed was required to provide sufficient catalyst activity to cause consumption of 8.72 liters (STP) of $H_2$.

As can be seen from the comparison given in Table II, hydrogenation activity of the presulfided-preformed catalyst of Example 2 of the present invention was superior to that of catalyst prepared from molybdenum naphthenate in accordance with the method of preparation of the prior art comparative catalyst system.

## TABLE II

| Mo Source | Presulfided Preformed Catalyst Concentrate | No Naphthenate |
|---|---|---|
| Wppm Mo for 8.71 liter STP $H_2$ reaction | 35 | 55 |
| Relative Activity, % | 157 | 100 |

In this patent specification, the following conversions of units are used:

Temperatures in $^\circ$F are converted to their $^\circ$C equivalents by subtracting 32 and then dividing by 1.8.

Pressures in pounds per square inch (psi) or pounds per square inch gauge (psig) are converted to their kPa equivalent by multiplying by 6.895.

Lengths expressed in inches are converted to cm by multiplying by 2.54.

## Claims

1. A method for preparing a catalyst wherein aqueous phosphomolybdic acid is heated in the presence of a hydrocarbonaceous oil and a gas selected from a hydrogen-containing gas, a hydrogen sulfide-containing gas and mixtures thereof to convert said phosphomolybdic acid to a solid catalyst, and which comprises the steps of:

(a) forming a mixture of a hydrocarbonaceous oil comprising constituents boiling above about 1050$^\circ$F (565.6$^\circ$C) and said aqueous solution of phosphomolybdic acid in an amount to provide from about 0.2 to 2 weight percent molybdenum, calculated as elemental molybdenum, based on said hydrocarbonaceous oil to produce a water-containing catalyst precursor concentrate;

(b) drying said water-containing catalyst precursor concentrate to remove said water and produce a substantially water-free catalyst precursor concentrate:

(c) contacting said water-free catalyst precursor concentrate with added hydrogen sulfide at a temperature from about 50°F (10°C) to about 600°F (315.6°C) and a hydrogen sulfide partial pressure ranging from about 0 psig (0 kPa) to about 100 psig (689 kPa) to produce a sulfided catalyst precursor concentrate;

(d) heating said catalyst precursor concentrate of step (b) or step (c) in the absence of hydrogen, at a temperature of at least about 600°F (315.6°C) and a total pressure ranging from about 0 to about 100 psig (about 0 to about 689.5 kPa) for a time sufficient to convert said catalyst precursor to a solid molybdenum-containing catalyst and, thereby, produce a catalyst concentrate, and recovering the resulting concentrate.

2. The method of claim 1 wherein said heating of step (d) is conducted at a temperature ranging from about 650 to about 800°F (from about 343.3 to 426.7°C) and a total pressure ranging from 0 to about 50 psig (0 to about 344.75 kPa).

3. The method of claim 1 or claim 2 wherein unreacted hydrogen sulfide remaining after said contacting of step (c) is separated from said sulfided catalyst precursor concentrate prior to said step (d).

4. The method of any one of claims 1 to 3 wherein said hydrocarbonaceous oil of step (a) is an atmospheric residium.

5. The method of any one of claims 1 to 4 wherein the atomic ratio of phosphorus to molybdenum in the aqueous solution of phosphomolybdic acid is in the range of from 0.083 to 2.0.

6. A process for hydroconverting a carbonaceous chargestock comprising a hydrocarbon to produce a hydroconverted oil product, which comprises reacting said carbonaceous chargestock comprising a catalyst with hydrogen at hydroconversion conditions, said catalyst being a catalyst concentrate prepared and recovered by a method in accordance with any one of claims 1 to 5, at least a portion of said catalyst concentrate being introduced into said carbonaceous chargestock.

7. The process of claim 6 wherein said carbonaceous chargestock comprises a hydrocarbonaceous oil and wherein said hydrocarbonaceous oil of step (a) has the same boiling point range as said hydrocarbonaceous oil of said chargestock.

8. The process of claim 6 wherein said hydrocarbonaceous oil of step (a) and said hydrocarbon of said chargestock have different boiling point ranges.

9. The process of claim 7 or claim 8 wherein said hydrocarbonaceous oil of step (a) is an atmospheric residuum.

10. The process of any one of claims 6 to 9 wherein said hydroconversion conditions include a temperature ranging from about 800 to about 900°F (from about 426.7 to about 482.2°C) and a hydrogen partial pressure ranging from about 50 to about 5000 psig (from about 344.75 to about 3447.5 kPa).

**Revendications**

1. Un procédé de préparation d'un catalyseur, dans lequel de l'acide phosphomolybdique aqueux est chauffé en présence d'une huile hydrocarbonée et d'un gaz choisi parmi un gaz contenant de l'hydrogène, un gaz contenant de l'hydrogène sulfuré et leurs mélanges en vue de la conversion dudit acide phosphomolybdique en un catalyseur solide et qui comprend les étapes :

a) de formation d'un mélange d'une huile hydrocarbonée contenant des constituants bouillant au-dessus d'environ 1050°F (565,5°C) et de ladite solution aqueuse d'acide phosphomolybdique en une quantité suffisante pour fournir environ 0,2 à 2 pourcent en poids de molybdène, calculés en molybdène élémentaire par rapport à ladite huile hydrocarbonée, pour produire un concentré de précurseur de catalyseur contenant de l'eau ;

b) de séchage dudit concentré de précurseur de catalyseur contenant de l'eau pour éliminer ladite eau et produire un concentré de précurseur de catalyseur pratiquement anhydre ;

c) de mise en contact dudit concentré de précurseur de catalyseur anhydre avec de l'hydrogène sulfuré ajouté, à une température d'environ 50°F (10°C) à environ 600°F (315,6°C) et sous une pression partielle d'hydrogène sulfuré s'étendant d'environ 0 psig (0 kPa) à environ 100 psig (689 kPa) pour produire un concentré de précurseur de catalyseur sulfuré ;

d) de chauffage dudit concentré de précurseur de catalyseur de l'étape b) ou de l'étape c) en l'absence d'hydrogène, à une température d'au moins environ 600°F (315,6°C) et sous une pression totale s'étendant d'environ 0 à environ 100 psig (environ 0 à environ 689,5 kPa) pendant un temps suffisant pour convertir ledit précurseur de catalyseur en un catalyseur à base de molybdène solide et produire ainsi un concentré de catalyseur, et de récupération du concentré résultant.

2. Le procédé selon la revendication 1, dans lequel le chauffage de l'étape d) a lieu à une température s'échelonnant d'environ 650 à environ 800°F (d'environ 343,3 à 426,7°C) et sous une pression totale s'étendant de 0 à environ 50 psig (0 à environ 344,75 kPa).

3. Le procédé selon la revendication 1 ou 2, dans lequel l'hydrogène sulfuré non transformé restant après ladite mise en contact de l'étape c) est séparé du concentré de précurseur de catalyseur sulfuré avant ladite étape d).

4. Le procédé selon l'une quelconque des revendications 1 à 3, dans lequel ladite huile hydrocarbonée de l'étape a) est un résidu de distillation atmosphérique.

5. Le procédé selon l'une quelconque des revendications 1 à 4, dans lequel le rapport atomique de phosphore à molybdène dans la solution aqueuse d'acide phosphomolybdique est de 0,083 à 2,0.

6. Un procédé pour l'hydroconversion d'une charge d'alimentation carbonée contenant un hydrocarbure en vue de l'obtention d'un produit à base d'huile hydroconvertie qui consiste à faire réagir ladite charge d'alimentation contenant un catalyseur avec de l'hydrogène dans des conditions d'hydroconversion, ledit catalyseur étant un concentré de catalyseur préparé et récupéré par un procédé selon l'une quelconque des revendications 1 à 5, une portion au moins dudit concentré de catalyseur étant introduite dans ladite charge d'alimentation carbonée.

7. Le procédé selon la revendication 6, dans lequel ladite charge d'alimentation contient une huile hydrocarbonée et dans lequel l'huile hydrocarbonée de l'étape a) possède le même intervalle d'ébullition que l'huile hydrocarbonée de ladite charge d'alimentation.

8. Le procédé selon la revendication 6, dans lequel ladite huile hydrocarbonée de l'étape a) et l'hydrocarbure de ladite charge d'alimentation présentent des intervalles d'ébullition différents.

9. Le procédé selon la revendication 7 ou 8, dans lequel ladite huile hydrocarbonée de l'étape a) est un résidu de distillation atmosphérique.

10. Le procédé selon l'une quelconque des revendications 6 à 9, dans lequel les conditions d'hydroconversion incluent une température s'étendant d'environ 800 à environ 900°F (d'environ 426,7 à environ 482,2°C) et une pression partielle d'hydrogène s'échelonnant d'environ 50 à environ 5000 psig (d'environ 344,75 à 3447,5 kPa).

## Ansprüche

1. Verfahren zur Herstellung eines Katalysators, bei dem eine wäßrige Phosphormolybdänsäure in Gegenwart eines kohlenwasserstoffhaltigen Öls und eines Gases, das unter einem wasserstoffhaltigen Gas, einem hydrogensulfidhaltigen Gas und Mischungen davon ausgewählt ist, erhitzt wird, um die Phosphormolybdänsäure in einen festen Katalysator umzuwandeln, und das folgende Schritte umfaßt:

(a) Herstellen einer Mischung aus einem kohlenwasserstoffhaltigen Öl, das Bestandteile enthält, die oberhalb von etwa 1050°F (565,6°C) sieden, und einer Menge der wäßrigen Phosphormolybdänsäurelösung, die ausreicht, etwa 0,2 bis 2 Gew.-% Molybdän, berechnet als elementares Molybdän, bezogen auf das kohlenwasserstoffhaltige Öl zu liefern, um ein wasserhaltiges Katalysatorvorläuferkonzentrat herzustellen;

(b) Trocknen des wasserhaltigen Katalysatorvorläuferkonzentrats, um das Wasser zu entfernen und ein im wesentlichen wasserfreies Katalysatorvorläuferkonzentrat herzustellen;

(c) Kontaktieren des wasserfreien Katalysatorvorläuferkonzentrats mit hinzugefügtem Hydrogensulfid bei einer Temperatur von etwa 50°F (10°C) bis etwa 600°F (315,6°C) und bei einem Hydrogensulfidpartialdruck von etwa 0 psig (0 kPa) bis etwa 100 psig (689 kPa), um ein sulfidiertes Katalysatorvorläuferkonzentrat herzustellen;

(d) Erhitzen des Katalysatorvorläuferkonzentrats aus Schritt (b) oder Schritt (c) in Abwesenheit von Wasserstoff bei einer Temperatur von mindestens etwa 600° F (315,6° C) und einem Gesamtdruck von etwa 0 bis etwa 100 psig (etwa 0 bis etwa 689,5 kPa) über einen Zeitraum, der ausreicht, den Katalysatorvorläufer in einen festen molybdänhaltigen Katalysator umzuwandeln und dabei ein Katalysatorkonzentrat herzustellen, und Gewinnen des sich bildenden Konzentrats.

2. Verfahren nach Anspruch 1, bei dem das Erhitzen aus Schritt (d) bei einer Temperatur von etwa 650 bis etwa 800° F (von etwa 343,3 bis 426,7° C) und einem Gesamtdruck von 0 bis etwa 50 psig (0 bis etwa 344,75 kPa) durchgeführt wird.

3. Verfahren nach Anspruch 1 oder 2, bei dem nach dem Kontaktieren aus Schritt (c) verbleibendes nicht umgesetztes Hydrogensulfid aus dem sulfidierten Katalysatorvorläuferkonzentrat vor dem Schritt (d) abgetrennt wird.

4. Verfahren nach einem der Ansprüche 1 bis 3, bei dem das kohlenwasserstoffhaltige Öl aus Schritt (a) ein atmosphärischer Rückstand ist.

5. Verfahren nach einem der Ansprüche 1 bis 4, bei dem das Atomverhältnis von Phosphor zu Molybdän in der wäßrigen Phosphormolybdänsäurelösung im Bereich von 0,083 bis 2,0 liegt.

6. Verfahren zum Hydrokonvertieren eines kohlenstoffhaltigen Einsatzproduktes, das einen Kohlenwasserstoff umfaßt, um ein hydrokonvertiertes Ölprodukt zu erhalten, bei dem das kohlenstoffhaltige Einsatzprodukt, das einen Katalysator enthält, mit Wasserstoff unter Hydrokonversionsbedingungen umgesetzt wird, wobei der Katalysator ein Katalysatorkonzentrat ist, das gemäß einem Verfahren der Ansprüche 1 bis 5 hergestellt und gewonnen wurde, wobei mindestens ein Teil des Katalysatorkonzentrats dem kohlenstoffhaltigen Einsatzprodukt zugesetzt wurde.

7. Verfahren nach Anspruch 6, bei dem das kohlenstoffhaltige Einsatzprodukt ein kohlenwasserstoffhaltiges Öl umfaßt und das kohlenwasserstoffhaltige Öl aus Schritt (a) denselben Siedebereich aufweist wie das kohlenwasserstoffhaltige Öl des Einsatzproduktes.

8. Verfahren nach Anspruch 6, bei dem das kohlenwasserstoffhaltige Öl aus Schritt (a) und der Kohlenwasserstoff des Einsatzproduktes verschiedene Siedebereiche aufweisen.

9. Verfahren nach Anspruch 7 oder 8, bei dem das kohlenwasserstoffhaltige Öl aus Schritt (a) ein atmosphärischer Rückstand ist.

10. Verfahren nach einem der Ansprüche 6 bis 9, bei dem die Hydrokonversionsbedingungen eine Temperatur von etwa 800 bis etwa 900° F (von etwa 426,7 bis etwa 482,2° C) und einen Wasserstoffpartialdruck von etwa 50 bis etwa 5000 psig (von etwa 344,75 bis etwa 3447,5 kPa) einschließen.

CARBONACEOUS CHARGESTOCK

H2 — 30

LIQUID-LIQUID SEPARATION — 8
42
40
BOTTOMS
44

GAS-LIQUID SEPARATION — 7
38
34
36

SLURRY HYDROCONVERSION — 6
32

28
26

CATALYST CONCENTRATE

HEATING ZONE — 5
24

SEPARATION ZONE — 4
22 → $H_2S$
20

SULFIDING ZONE — 3
18
19 ← $H_2S$

DRYING ZONE — 2
16
14

MIXING ZONE — 1
CATALYST PRECURSOR SOLUTION — 12

HYDROCARBON — 10